(19)

**Europäisches Patentamt**

**European Patent Office**

**Office européen des brevets**

(11)  **EP 4 234 751 A1**

(12)  **DEMANDE DE BREVET EUROPEEN**

(43) Date de publication:
**30.08.2023   Bulletin 2023/35**

(21) Numéro de dépôt: **23158333.7**

(22) Date de dépôt: **23.02.2023**

(51) Classification Internationale des Brevets (IPC):
*C22C 47/14* (2006.01)    *C22C 49/14* (2006.01)
*C22C 49/02* (2006.01)    *B22F 3/00* (2021.01)
*B22F 1/08* (2022.01)    *B22F 3/02* (2006.01)
*B22F 3/22* (2006.01)    *B22F 3/105* (2006.01)
*B33Y 80/00* (2015.01)    *C22C 45/00* (2023.01)
*B33Y 10/00* (2015.01)    *C22C 45/02* (2006.01)
*B33Y 70/10* (2020.01)    *C22C 45/04* (2006.01)
*C22C 45/10* (2006.01)

(52) Classification Coopérative des Brevets (CPC):
(C-Sets disponibles)
**C22C 47/14; B22F 3/006; B22F 3/02; B22F 3/105;
B22F 3/225; B33Y 10/00; B33Y 70/10; B33Y 80/00;
C22C 45/001; C22C 45/003; C22C 45/02;
C22C 45/04; C22C 45/10; C22C 49/02;
C22C 49/14;**                    (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité:  **25.02.2022  FR 2201673**

(71) Demandeur: **Lavoisier Composites**
**69680 Chassieu (FR)**

(72) Inventeurs:
• **LOISEAU, Guillaume**
**69290 Craponne (FR)**
• **GAUMOND, Baptiste**
**42600 Chalain D'Uzore (FR)**

(74) Mandataire: **Plasseraud IP**
**66, rue de la Chaussée d'Antin**
**75440 Paris Cedex 09 (FR)**

(54)    **COMPOSITE À MATRICE MÉTALLIQUE ET SON PROCÉDÉ DE FABRICATION**

(57)    Le but de l'invention est de fournir un matériau composite comprenant un renfort fibreux inclus dans une matrice de verre métallique présentant une résistance en flexion et un allongement à rupture améliorés, par comparaison au verre métallique sans renfort fibreux.

À cette fin, l'invention concerne un matériau composite comprenant un renfort fibreux à base de fibres de carbone inclus dans une matrice de verre métallique caractérisé en ce que :

(1.1) la matrice est amorphe ;

(1.2) la matrice est obtenue à partir de particules de verre métallique dont la taille est donnée par leur $D_{50}$ désigné par la référence $D^{pvm}{}_{50}$;

(1.3) le renfort fibreux comporte des fibres de carbone de longueur moyenne $L^{fc*}$ inférieure ou égale à 3 fois $D^{pvm}{}_{50}$, de préférence 1,5 fois $D^{pvm}{}_{50}$ ;

(1.4) le taux de renfort fibreux est compris entre 0,1 et 50 %v, de préférence 15 et 45 %v ; et encore plus préférentiellement entre 20 %v et 40 %v.

L'invention concerne également un procédé de fabrication de ce matériau composite.

FIG.3

**(Cont. page suivante)**

(52) Classification Coopérative des Brevets (CPC):
(Cont.)
B22F 1/08; B22F 10/28; B22F 2003/1051;
B22F 2999/00; C22C 2200/02

C-Sets
B22F 2999/00, C22C 47/14, B22F 3/105,
B22F 3/225, B22F 10/28

**Description**

**Domaine de l'invention**

L'invention relève du domaine des matériaux composites à base de verre métallique et de leurs technologies de fabrication.

En particulier, l'invention se rapporte à un matériau composite comprenant un renfort fibreux inclus dans une matrice de verre métallique.

L'invention a également pour objet des procédés de fabrication du matériau composite.

L'invention vise également les objets réalisés à partir de ce matériau composite, et destinés à des domaines d'application comme l'horlogerie, en particulier l'horlogerie de luxe, la maroquinerie, le sport, l'électronique grand public, l'industrie ferroviaire...

**Arrière-plan technologique de l'invention**

De nombreux alliages métalliques amorphes avec une bonne capacité de formation de verre ont été développés au cours des dernières années.

Ce sont des verres métalliques massifs (VMM) qui possèdent des propriétés mécaniques, magnétiques, thermophysiques et structurales très intéressantes.

Ils présentent, par exemple, jusqu'à deux fois la résistance à la rupture et quatre fois l'élasticité de leurs homologues cristallins et ont donc un potentiel très élevé d'utilisation comme matériaux de structure.

Malheureusement, ces propriétés ne peuvent pas être pleinement exploitées en raison du comportement à la rupture fragile de ces alliages.

En l'absence de structure cristalline, la déformation par déplacement de dislocation est impossible, mais se produit dans une ou quelques bandes de cisaillement très localisées. Même si les VMM peuvent montrer un certain type de mécanisme de fracture « ductile » à l'échelle microscopique, les verres métalliques sont généralement fragiles parce que l'énergie de fracture est concentrée dans un très petit volume de l'échantillon. Une amélioration drastique de la plasticité des VMM conduirait à un nouveau matériau révolutionnaire pour les applications structurelles.

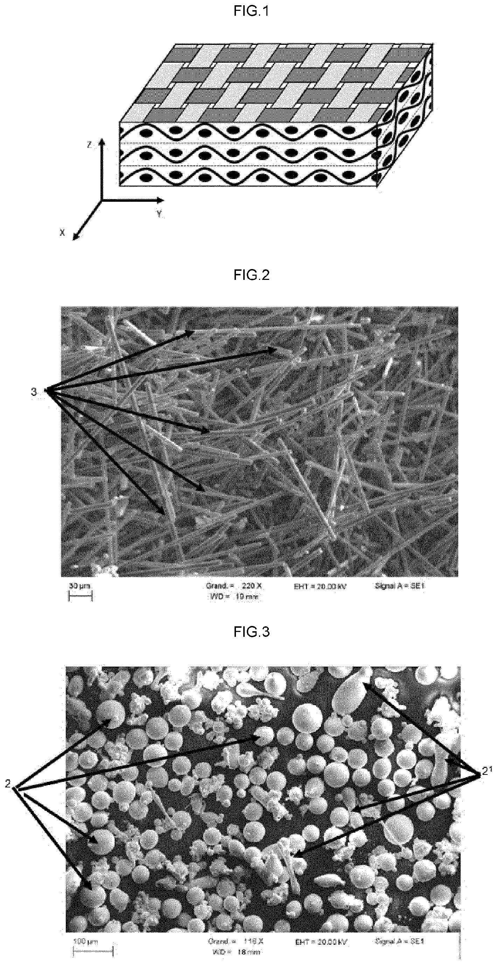

Des travaux présentés dans la littérature (*vide i.a § [008] infra*) font état de l'introduction de fibres de carbone dans une matrice verre métallique. Il s'agit plus particulièrement de structures tissées de fibres de carbone associées à une matrice verre métallique à base Zirconium connue sous la dénomination Vitreloy 1. Les résultats attribués à ces travaux sont la mise au point d'un mode de mise en oeuvre permettant de conserver l'état amorphe de la matrice dans le composite par infiltration. Les composites ainsi obtenus sont stratifiés et possèdent des propriétés mécaniques telles que la résistance à la traction, le module de Young, la résistance en compression, qui sont hétérogènes. En d'autres termes, les propriétés mécaniques de ces composites sont anisotropes. Cela signifie, pour un composite dont le renfort fibreux est un tissu et dont la matrice est un VMM, que les propriétés mécaniques sont plus élevées dans le plan X/Y que celles du matériau composite dans la direction Z.(voir Figure 1 annexée).

Par ailleurs, le procédé d'obtention de ces composites requière des températures de mise en oeuvre très élevées, pour amener la matrice VMM à une viscosité suffisamment faible pour l'infiltration du renfort fibreux lors de la fabrication du composite. Cette contrainte de fabrication a pour conséquence que ce procédé est peu commode à mettre en oeuvre et énergivore.

« Kim, C. P., Busch, R., Masuhr, A., Choi-Yim, H. & Johnson, W. L_[Processing of Carbon-Fiber-Reinforced Zr41.2Ti13.8Cu12.5Ni10.0Be22.5 Bulk Metallic Glass Composites". Appl. Phys. Lett. 79, 1456-1458 (2001*) ]*».

**Objectifs de l'invention**

Dans ce contexte, l'invention vise à satisfaire au moins l'un des objectifs suivants

- fournir un matériau composite comprenant un renfort fibreux inclus dans une matrice de verre métallique présentant une résistance en flexion et un allongement à rupture améliorés, par comparaison au même verre métallique sans renfort fibreux ;
- fournir un matériau composite comprenant un renfort fibreux inclus dans une matrice de verre métallique, résistant à l'abrasion ;
- fournir un matériau composite comprenant un renfort fibreux inclus dans une matrice de verre métallique, doté de propriétés mécaniques, telles que la résistance à la traction, le module de Young, la résistance en compression, qui soient homogènes et isotropes ;
- fournir un matériau composite comprenant un renfort fibreux inclus dans une matrice de verre métallique, qui soit de fabrication aisée et économique ;

- fournir un procédé de fabrication d'un matériau composite comprenant un renfort fibreux inclus dans une matrice en verre métallique, ce matériau composite satisfaisant à au moins l'un des objectifs énoncés ci-dessus ;
- fournir un objet à partir d'un matériau composite à base de verre métallique satisfaisant à au moins l'un des objectifs ci-dessus.

**Brève description de l'invention**

L'invention satisfait à au moins l'un des objectifs ci-dessus et concerne, selon un premier aspect, un matériau composite comprenant un renfort fibreux à base de fibres de carbone inclus dans une matrice de verre métallique caractérisé en ce que :

(1.1) la matrice est amorphe ;
(1.2) la matrice est obtenue à partir de particules de verre métallique dont la taille est donnée par leur $D_{50}$ désigné par la référence $D^{pvm}_{50}$;
(1.3) le renfort fibreux comporte des fibres de carbone de longueur $L^{fc*}$ inférieure ou égale à 3 fois $D^{pvm}_{50}$, de préférence 1,5 fois $D^{pvm}_{50}$ ;
(1.4) le taux de renfort fibreux est compris entre 0,1 et 50 %v, de préférence 15 et 45 %v ; et encore plus préférentiellement entre 20 % et 40 %v.

Les avantages de ce composite à matrice VMM sont notamment les suivants :

- propriétés mécaniques (résistance en flexion, allongement à la rupture...), améliorées, en particulier par rapport à un témoin constitué par le même verre métallique sans renfort fibreux ;
- allègement sans porter préjudice aux propriétés mécaniques;
- facilitation et application de la fabrication.

Le matériau composite selon l'invention présente par ailleurs l'une au moins des caractéristiques avantageuses et performantes suivantes.

(i) la matrice est un alliage verre métallique constitué d'une base Zr ou Pd ou Fe ou Pt ou Cu ou Au ou Ti ou Ni.

(ii) les particules métalliques permettant d'obtenir la matrice ont un $D^{pvm}_{50}$, est telle que, en microns et dans un ordre croissant de préférence :

$$5 \leq D^{pvm}_{50} \leq 500 \;;\; 5 \leq D^{pvm}_{50} \leq 250 \;;\; 20 \leq D^{pvm}_{50} \leq 250 \;;\; 20 \leq D^{pvm}_{50} \leq 100.$$

(iii) la longueur moyenne $L^{fc*}$ des fibres de carbone du renfort fibreux, est telle que, en microns et dans un ordre croissant de préférence :

$$10 \leq L^{fc*} \leq 1000 \;;\; 10 \leq L^{fc*} \leq 500 \;;\; 30 \leq L^{fc*} \leq 500 \;;\; 30 \leq L^{fc*} \leq 300.$$

(iv) les fibres de carbone du renfort fibreux proviennent de fibres de carbone libres les unes par rapport aux autres et dont la longueur moyenne $L^{fc}$ est inférieure ou égale à 3 fois $D^{pvm}_{50}$, de préférence 1,5 fois $D^{pvm}_{50}$.

(v) les fibres de carbone du renfort fibreux proviennent de fibres de carbone libres les unes par rapport aux autres et dont la longueur moyenne $L^{fc}$ est telle que, en microns et dans un ordre croissant de préférence :

$$10 \leq L^{fc} \leq 1000 \;;\; 10 \leq L^{fc} \leq 500 \;;\; 30 \leq L^{fc} \leq 500 \;;\; 30 \leq L^{fc} \leq 300.$$

(vi) Le matériau composite selon l'invention est obtenu

- par frittage/pressage à chaud ;
- par injection/moulage
- ou par impression 3D

à partir d'un mélange comprenant :

→ une poudre de particules de verre métallique dont la taille, donnée par leur $D_{50}$ désigné par la référence $D^{pvm}_{50}$ ;
→ des fibres de carbone de longueur $L^{fc}$.

Selon un deuxième de ses aspects, l'invention concerne un procédé de fabrication d'un matériau composite comprenant un renfort fibreux inclus dans une matrice en verre métallique, ce matériau composite étant en particulier celui défini par l'une au moins des caractéristiques (i) à (vi) ci-dessus.

Dans un premier mode de mise en oeuvre, ce procédé consiste essentiellement à :

- A - mettre en oeuvre un dispositif comportant un moule ;
- B - mélanger une poudre de particules de verre métallique dont la taille est donnée par leur $D_{50}$ désigné par la référence $D^{pvm}_{50}$, avec des fibres de carbone libres les unes par rapport aux autres et dont la longueur $L^{fc}$ est inférieure ou égale à 3 fois $D^{pvm}_{50}$, de préférence 1,5 fois $D^{pvm}_{50}$ ; selon un pourcentage volumique de fibres par rapport l'ensemble particules/fibres compris entre 0,1 et 50 %v, de préférence 15 et 45 %v; entre 20 % et 40 %v ;
- C - disposer dans le moule, le mélange obtenu à l'étape -B-;
- D - d'une part, porter le mélange à fritter contenu dans le moule, à une température comprise entre la température de transition vitreuse et la température de cristallisation, de préférence en augmentant par paliers la température du moule ; et, d'autre part, en appliquant sur le mélange contenu dans le moule, une pression comprise entre 50 et 150 MPa ;
- E - récupérer le matériau composite obtenu, mis en forme dans le moule, et constitué par ◆ une matrice amorphe ;

◆ et un renfort fibreux comportant des fibres de carbone de longueur $L^{fc*}$ inférieure ou égale à 3 fois $D^{pvm}_{50}$, de préférence 1,5 fois $D^{pvm}_{50}$ et présent selon un taux de renfort fibreux compris entre 0,1 et 50 %v, de préférence 15 et 45 %v ; et encore plus préférentiellement entre 20 % et 40%v.

Selon une première possibilité •(P1)• du premier mode de mise en oeuvre de ce procédé :

- le moule fait partie intégrante d'un dispositif de frittage par la technique de Spark Plasma Sintering (SPS), ce dispositif comprenant:

    □ au moins un organe permettant d'exercer pression sur le mélange à fritter contenu dans le moule,
    □ et des moyens de mise sous tension électrique du moule et, éventuellement, du mélange à fritter contenu dans le moule ; ce dernier étant éventuellement, soumis à une tension électrique générant un plasma.

Selon une 2e possibilité •(P2)• du premier mode de mise en oeuvre de ce procédé :

• le moule fait partie intégrante d'un dispositif d'injection/moulage.

Dans un 2e mode de mise en oeuvre •(P3)•, ce procédé consiste essentiellement:

- à mettre en oeuvre par impression 3D un mélange d'une poudre de particules de verre métallique dont la taille est donnée par leur $D_{50}$ désigné par la référence $D^{pvm}_{50}$, avec des fibres de carbone libres les unes par rapport aux autres et dont la longueur $L^{fc}$ est inférieure ou égale à 3 fois $D^{pvm}_{50}$, de préférence 1,5 fois $D^{pvm}_{50}$ ; selon un pourcentage volumique de fibres par rapport l'ensemble particules/fibres compris entre 0,1 et 50 %v, de préférence 15 et 45 %v; entre 20 % et 40%v;
- et à récupérer le matériau composite obtenu, constitué :

    ◆ par une matrice amorphe,
    ◆ et par un renfort fibreux comportant des fibres de carbone de longueur $L^{fc*}$ inférieure ou égale à 3 fois $D^{pvm}_{50}$, de préférence 1,5 fois $D^{pvm}_{50}$ et présent selon un taux de renfort fibreux compris entre 0,1 et 50 %v, de préférence 15 et 45 %v ; et encore plus préférentiellement entre 20 % et 40 %v.

Selon un troisième de ses aspects, l'invention concerne un objet réalisé en matériau composite selon l'invention, ou obtenu par un procédé selon l'invention.

De préférence, cet objet est choisi parmi les articles suivants : composants horlogers ; articles de joaillerie ; accessoires de mode ; articles de sports et loisirs ; articles de téléphonie ; articles HIFI ; dispositifs et outils pour le secteur médical ; articles pour l'industrie de l'aéronautique et du spatial.

## Brève description des dessins

Cette description est faite en référence aux figures annexées illustrant des exemples de réalisation non limitatifs, et dans lesquelles :

**Fig. 1**
[Fig. 1]
La figure 1 est une vue en perspective d'un matériau composite, fibres de carbone matrice de verre métallique, selon l'art antérieur mentionné au § 6, 7 & 8 supra dans un référentiel spatial orthonormé XYZ.

**Fig. 2**
[Fig. 2]
La figure 2 est une image au microscope électronique à balayage ("MEB") d'un échantillon de fibres de carbone libres ou mobiles les unes par rapport aux autres, utilisées comme matière première dans la fabrication du matériau composite selon l'invention.

**Fig. 3**
[Fig. 3]
La figure 3 est une image au microscope électronique à balayage ("MEB") d'un échantillon de particules de verre métallique amorphe, utilisées comme matière première dans la fabrication du matériau composite selon l'invention.

**Fig. 4**
[Fig. 4]

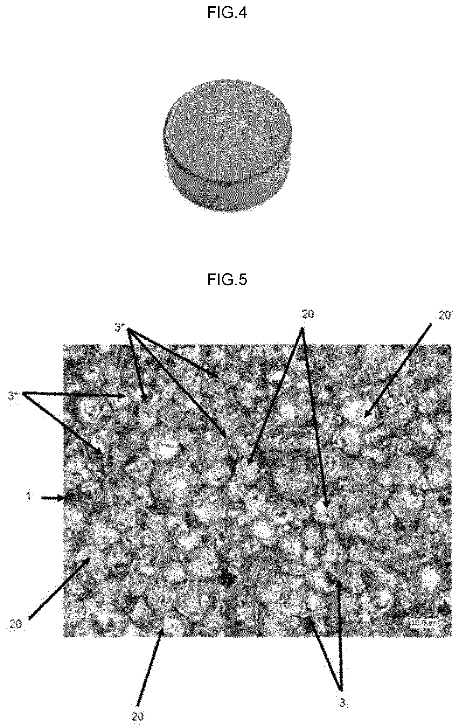

La figure 4 représente un cliché d'une pièce du matériau composite après consolidation, directement sortie de moulage, telle qu'obtenue dans l'exemple 1.

**Fig. 5**
[Fig. 5]
La figure 5 est une image au microscope optique avec un zoom de x 500 de la surface de la pièce de la figure 4.

**Fig. 6**
[Fig. 6]

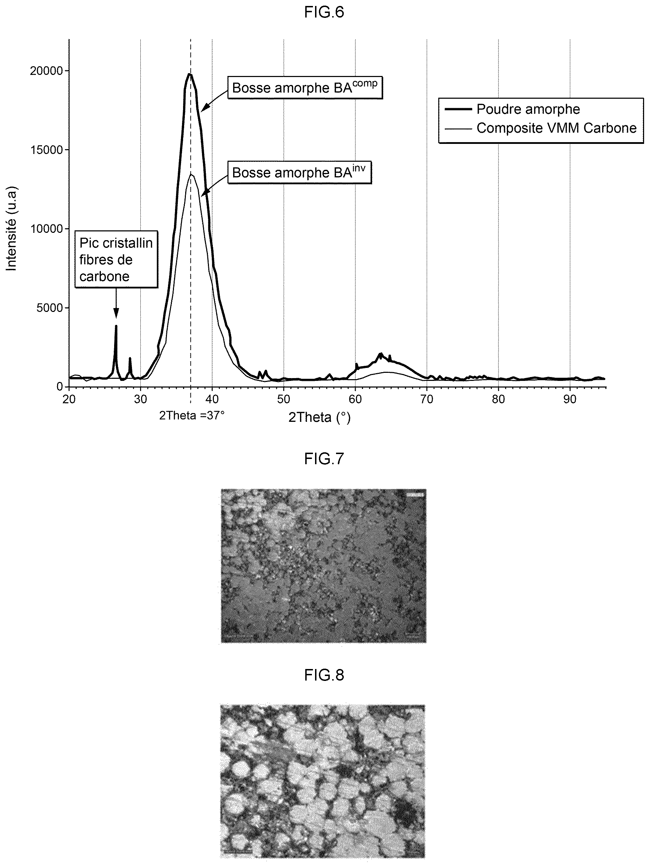

La figure 6 est un diffractogramme aux rayons X de la pièce montrée sur la figure 4.

**Fig. 7**
[Fig. 7]
La figure 7 présente un cliché en microscopie optique avec un zoom de x 200, d'une pièce en matériau composite selon l'invention, telle qu'obtenue à l'exemple 1 après un post-traitement

**Fig. 8**
[Fig. 8]
La figure 8 présente un cliché en microscopie optique, de la pièce de la figure 7, avec un zoom de x 500.

## Description détaillée de l'invention

**• Définitions**

☐ Dans tout le présent exposé, tout singulier désigne indifféremment un singulier ou un pluriel.
☐ Par convention, le symbole " * " affecté en exposant à des paramètres signifiera qu'il s'agit de caractéristiques du matériau composite fini, par contraste avec les mêmes paramètres relatifs aux matières premières mises en oeuvre pour la fabrication du matériau composite.
☐ Les définitions données ci-après à titre d'exemples, peuvent servir à l'interprétation du présent exposé :

- *"matériau composite"* : matériau hétérogène constitué d'au moins deux composants et dont les propriétés sont différentes à celles de chaque constituant pris indépendamment
- "amorphe" : exempt ou comprenant au plus 50 %m (en masse), de préférence au plus 10 %m, et, plus préférentiellement encore au plus 5 %m de phase cristalline par rapport à l'ensemble des phases présentes dans le matériau composite.

- *"verre métallique"* : métal ou alliage métallique amorphe.
- *"particules"* : corpuscule dont le rapport de forme est faible, préférentiellement inférieur à 5, plus préférentiellement proche de 1. Le facteur de forme est un nombre sans dimension lié à la forme d'un objet. C'est le rapport entre deux dimensions perpendiculaires de l'objet, la plus longue sur la plus courte.
- *"fibres"* : formation élémentaire, végétale ou animale, d'aspect filamenteux, se présentant généralement sous forme de faisceaux. On emploie également ce terme par extension pour désigner certains matériaux minéraux ou synthétiques ayant le même aspect. On utilise généralement plusieurs fibres pour faire un fil. Le facteur de forme pour ces éléments est assez élevé, préférentiellement supérieur à 5, plus préférentiellement supérieur à 1 000 pour des fibres dites longues (L>1m).
- *"base d'un alliage métallique"* : Elément majoritaire de l'alliage métallique
- "%v" : pourcentage volumique d'un composant par rapport au volume total du matériau.
- *"sensiblement'* ; *"de l'ordre de"* ; "environ" : à + ou - 10 % près, de préférence 5 % près.

## Composite :

Cette invention concerne des composites dont la matrice est composée de particules de verre métallique (également dénommé verre métallique massif : VMM) et dont le renfort fibreux est formé de fibres de carbone courtes, c'est-à-dire de fibres de carbone dont la longueur est judicieusement sélectionnée en fonction de la taille des particules de VMM.

Un verre métallique est un alliage métallique amorphe ou métal amorphe est un solide de structure amorphe plutôt que cristalline.

Comme montré sur la figure 5, le matériau composite 1 selon l'invention comprend une matrice 20 formée par agrégation de particules de verre métallique 2 (particules de départ) et dans laquelle sont incluses les fibres de carbone 3 formant le renfort fibreux du composite 1.

Les particules de verre métallique 2 desquelles est issue la matrice du matériau composite selon l'invention, ont une taille donnée par leur $D_{50}$, noté $D^{pvm}_{50}$, et répondant à la définition suivante : il s'agit de la distribution de la taille des particules, également connue sous le nom de diamètre médian ou valeur moyenne de la distribution de la taille des particules, c'est la valeur du diamètre des particules à 50% dans la distribution cumulative. La distribution $D_{50}$ de la taille des particules est l'un des paramètres importants caractérisant la taille des particules. Par exemple, si $D_{50} = 5,8$ $\mu m$, alors 50 % des particules de l'échantillon sont plus grandes que 5,8 $\mu m$, et 50% plus petites que 5,8 $\mu m$. La $D_{50}$ est généralement utilisée pour représenter la taille d'un groupe de particules. -. Dans le cadre de l'invention, $D^{pvm}_{50}$ est mesuré via une analyse granulométrique par granulométrie laser selon la norme ISO 13320.

Ces particules peuvent donc avoir tout type de morphologie. Les particules désignées par la référence 2 sur la figure 3 sont sensiblement sphériques, tandis que celles désignées par la référence $2^1$ ont des formes allongées, non sphériques. Les particules de départ montrées sur la figure 3, à titre d'exemple, ont un $D^{pvm}_{50} = 63$ $\mu m$. Ces particules de départ 2 peuvent elles aussi avoir tout type de morphologie.

La composition de ces particules de VMM est spécifique et leur permet de rester amorphes, notamment lorsque la fabrication du matériau composite 1 est effectuée dans les conditions définies ci-après pour la mise en oeuvre du procédé selon l'invention. De préférence, ces matériaux sont, entre autres, des alliages métalliques issus de trois grandes familles :

- 1- VMM base Palladium. Ce type d'alliages permet d'obtenir un verre métallique, doté d'une bonne résistance à l'altération (corrosion, rayures, ...) et ayant des qualités esthétiques reconnues. Un tel matériau composite peut ainsi servir de matière première pour la réalisation de dispositif médicaux.
  Le Palladium peut être allié notamment avec des éléments choisis dans le groupe comprenant - avantageusement constitué par - un ou plusieurs des éléments suivants sans limitation : argent ; or ; platine ; aluminium ; fer ; cuivre ; titane ; nickel ; tungstène ; chrome ; fer ; manganèse ; zirconium ; hafnium ; vanadium ; niobium ; molybdène ; étain ; bismuth ; antimoine ; plomb ; cadmium ; béryllium ; ou sélénium et leurs combinaisons.
- 2- VMM base Zirconium. Ce type d'alliages permet d'obtenir un matériau composite verre métallique, doté d'excellentes caractéristiques mécaniques telles que, la résistance mécanique en compression et l'élasticité. Un tel matériau composite peut ainsi servir de matière première pour la réalisation de ressorts, de mécanismes de fixation élastiques, de montres ou encore de matériel chirurgical.
  Le Zirconium peut être allié notamment avec des éléments choisis dans le groupe comprenant - avantageusement constitué par - un ou plusieurs des éléments suivants sans limitation : argent ; or ; platine ; palladium ; aluminium ; fer ; cuivre ; titane ; nickel ; tungstène ; chrome ; fer ; manganèse ; hafnium ; vanadium ; niobium ; molybdène ; étain ; bismuth ; antimoine ; plomb ; cadmium ; béryllium ; ou sélénium et leurs combinaisons.

- 3- VMM base Fer (alliage magnétique) : Ce type d'alliages permet d'obtenir verre métallique, ayant une grande résistance à l'usure et une très grande dureté (par exemple de l'ordre de 950HV). Un tel matériau composite peut ainsi servir de matière première pour la réalisation de matériel catalytique et d'objets pour le sport (batte de baseball, raquette de tennis, ...).

Le Fer peut être allié notamment avec des éléments choisis dans le groupe comprenant - avantageusement constitué par un ou plusieurs des éléments suivants sans limitation : argent ; or ; platine ; palladium ; aluminium ; cuivre ; titane ; nickel ; tungstène ; chrome ; fer ; manganèse ; zirconium ; hafnium ; vanadium ; niobium ; molybdène ; étain ; bismuth ; antimoine ; plomb ; cadmium ; béryllium ; ou sélénium et leurs combinaisons.

Selon des variantes de l'invention, des alliages VMM à base de platine, de cuivre, d'or, de nickel ou de titane peuvent être envisagés. À titre d'exemples, on peut citer : Au65.2Cu22.4Ag12.4, Pt57.5Cu14.7Ni5.3P22.5, Cu60Zr30Ti10, Ni70Pd10P16B4, ou encore Ti62Zr15V10Cu4Be9

Dans d'autres modes de réalisation de l'invention, les particules de verre métallique du matériau composite 1, peuvent être un mélange de particules de différents alliages et/ou un mélange de particules de différentes tailles $D^{pvm}_{50}$.

Renfort fibreux : Conformément à l'invention, les fibres 3* du renfort fibreux inclus dans la matrice résultant de l'agrégation de particules 2 de VMM, sont constituées de fibres courtes 3, dont la longueur moyenne $L^{fc*}$ n'excède pas une valeur plafond égale à 3 × $D^{pvm}_{50}$ des particules de VMM.

Cette longueur moyenne $L^{fc*}$ est déterminée après dissolution du composite dans des acides forts type HCl-$H_2SO_4$-$HNO_3$-HF.

Le protocole mis en oeuvre est le suivant :

1- Prélèvement d'un échantillon de 0,5 à 2 g de matériau composite.
2- Dissolution totale (supérieure ou égale à 95%w) de la matrice VMM, à chaud (température ambiante - 200°C) dans un bain d'acide judicieusement choisi en fonction du VMM;
3- Filtration sur filtre céramique (taille de pore inférieure ou égale à 5 $\mu$m);
4- Rinçage à l'eau déminéralisée;
5- Mesure de la longueur des fibres, sur clichés optiques (pris par microscopie optique grossissement x500) au moyen du logiciel Matlab®, pour un échantillon pris aléatoirement.

$L^{fc*}$ est par exemple compris entre 35 et 500 microns.

Dans l'exemple du matériau composite 1 montré sur les figures 4&5, $L^{fc*}$ = 60 $\mu$m.

Les fibres de carbone 3* incluses dans la matrice 20 sont issues de fibres de carbone 3 (fibres de départ) telles qu'elles apparaissent sur la figure 2 annexée. Ces fibres de départ 3 ont une longueur moyenne $L^{fc}$, et répondent à la même définition que celle donnée ci-dessus pour la longueur moyenne $L^{fc*}$ des fibres de carbone 3* du matériau composite 1 montré sur la figure 4.

Conformément à l'invention, la longueur moyenne $L^{fc}$ des fibres de départ 3, n'excède pas une valeur plafond égale à 3 × $D^{pvm}_{50}$ des particules 2 de VMM.

Cette longueur moyenne $L^{fc}$ peut être déterminée par mesure statistique sur clichés optiques (pris par microscopie optique grossissement x500) au moyen du logiciel Matlab®, pour un échantillon pris aléatoirement.

Avantageusement, $L^{fc}$= $L^{fc*}$, avec une tolérance de +/- 15 %

Dans l'exemple montré à la figure 2, la longueur $L^{fc}$ moyenne des fibres de carbone de départ 3*, est de l'ordre de 60 $\mu$m

Suivant une disposition remarquable de l'invention, les fibres de départ 3 destinées à constituer le renfort fibreux sont libres ou mobiles les unes par rapport aux autres, afin de faciliter leur écoulement et leur mélange avec les particules 2 de VMM, lors de la fabrication du matériau composite 1 suivant l'invention.

Cela signifie que les fibres 3 sont indépendantes les unes des autres et gardent leur mobilité propre.

À cette fin, il est avantageux qu'elles ne soient pas ensimées. Dans le cas où elles le seraient, il convient qu'elles soient désensimées par tout moyen connu et approprié.

Les fibres utilisées comme fibres de départ 3 pour constituer le renfort fibreux du matériau composite 1 à matrice 20 VMM, sont avantageusement des fibres qui ne se dégradent pas et qui gardent leur intégrité chimique, physique et/ou mécanique jusqu'à des températures d'au moins 600°C, de préférence d'au moins 700°C, et, plus préférentiellement encore de l'ordre de 800°C.

Les fibres dotées de propriétés non nucléantes et/ou retardantes vis-à-vis de la cristallisation du VMM, sont privilégiées dans le cadre de l'invention.

Dans ce contexte, les fibres de carbone sont des candidats de choix pour le composite selon l'invention.

Ce sont encore plus préférentiellement des fibres de carbone comprenant une ou plusieurs catégories de fibres parmi lesquelles : Haute Résistance, Module Intermédiaire, Haut Module et Ultra Haut Module telles que définies par E. Fitzer, K. H. Köchling, H. P. Boehm, and H. Marsh, "Recommended terminology for the description of carbon as a solid" Pure Appl. Chem., vol. 67, no. 3, pp. 473-506, 1995.

Les fibres de carbone peuvent être générées, sans limitation, à partir de précurseurs tels que la rayonne, le polyacrylonitrile (PAN) et le brai. Les précurseurs faits de rayonne sont des matériaux cellulosiques. Les précurseurs à base de PAN sont issus de la pétrochimie et ont une excellente résistance à la traction, grâce à un minimum de défauts de surface. Les précurseurs de brai à base de bitume de pétrole, de goudron de houille et de chlorure de polyvinyle peuvent également être utilisés pour produire des fibres de carbone.

De manière surprenante et inattendue, les fibres de départ 3*, en particulier les fibres 3* en carbone, ne se comportent pas, ainsi que l'on aurait pu s'y attendre, comme un agent nucléant propre à favoriser la cristallisation, allant à l'encontre du caractère amorphe recherché pour le matériau composite. Au contraire, ces fibres de départ 3* agissent comme stabilisant du matériau composite, à l'état amorphe.

L'une des caractéristiques essentielles du matériau composite 1 [*matrice 20 VMM/renfort fibreux à fibres 3\* de carbone courtes*], est en effet la conservation du caractère amorphe propre aux particules 2 de VMM de départ (figure 3), après fabrication du composite 1 et, plus particulièrement, après consolidation (densification/frittage) du composite 1.

Cela se traduit dans un diffractogramme aux rayons X (Figure 6), d'une part, de la poudre de particules 2 de VMM de départ, et, d'autre part, du matériau composite 1 [*matrice 20 VMM/renfort fibreux 3\**], par une bosse amorphe $BA^{comp}$ pour la poudre de particules 2 de VMM de départ et par une bosse amorphe $BA^{inv}$ pour le matériau composite 1 [*matrice 20 VMM/renfort fibreux 3\**]; $BA^{comp}$ & $BA^{inv}$ étant préférence centrées, sensiblement, sur la même valeur d'angle 2Théta = 37°.

La méthode de référence pour la réalisation du diffractogramme aux rayons X est la suivante : NF EN 1330-11.

Le matériau composite 1 selon l'invention possède une résistance en compression améliorée par comparaison au verre métallique sans renfort fibreux.

Par "améliorée", on entend avantageusement un pourcentage d'augmentation d'au moins 5%, de préférence d'au moins 10%.

Les mesures comparatives de ces propriétés améliorées sont effectuées avec des éprouvettes de même forme et de mêmes dimensions pour le matériau composite 1 selon l'invention et pour le matériau témoin constitué par la matrice de verre métallique sans renfort fibreux.

## Procédé

Plusieurs voies sont possibles pour la fabrication du matériau composite 1 [*matrice 20 VMM/renfort fibreux 3\**] selon l'invention.

Conformément à cette dernière, les 3 voies suivantes sont particulièrement privilégiées :

- (P1)• frittage/pressage à chaud ;
- (P2)• injection/moulage ;
- (P3)• ou impression 3D ;

utilisant un mélange comprenant :

→ une poudre de particules 2 de verre métallique dont la taille, donnée par leur $D_{50}$ désigné par la référence $D^{pvm}_{50}$ ;
→ des fibres de carbone de longueur $L^{fc*}$.

Etape A : Mise en oeuvre d'un dispositif comportant un moule.

- (P1)• Le moule fait partie intégrante d'un dispositif de frittage par la technique de Spark Plasma Sintering (SPS). Ce dispositif comprend au moins un organe permettant d'exercer pression sur le matériau à fritter contenu dans le moule, des moyens de mise sous tension électrique du moule et, éventuellement, du mélange, obtenu à l'étape -B-, à fritter et contenu dans le moule ; ce dernier étant éventuellement, soumis à une tension électrique générant un plasma.
  Il peut s'agir par exemple d'un dispositif SPS du type HP D25 de la société FCT®.
- (P2)• Le moule fait partie intégrante d'un dispositif d'injection/moulage Il peut s'agir par exemple d'un dispositif d'injection/moulage du type ENGEL e-motion 110.

Etape -B- :

Les fibres de carbone 3 et la poudre d'alliage verre métallique sont mélangées à l'aide d'un mélangeur pour poudre. La poudre est faite de particules 2 de verre métallique dont la taille est donnée par leur $D_{50}$ désigné par la référence $D^{pvm}_{50}$, avec des fibres 3 de carbone libres ou mobiles les unes par rapport aux autres et dont la longueur $L^{fc}$ est inférieure ou égale à 3 fois $D^{pvm}_{50}$, de préférence 1,5 fois $D^{pvm}_{50}$ ; selon un %v de fibres par rapport l'ensemble particules/fibres compris entre 0,1 et 50 % v/v, de préférence 15 et 45 %v ; encore plus préférentiellement entre 20 %v et 40 %v.

Cette étape permet d'obtenir un mélange homogène utile à l'obtention d'un matériau composite 1 aux propriétés isotropes. Cette étape de mélange est l'une des étapes clés,

pour faciliter l'étape de densification avec une distribution régulière des fibres 3 de carbone et de particules 2 de l'alliage.

Etape -C- :

- (P1)• : Le mélange de poudre de [*particules 2/fibres 3*] de l'étape -B-, est disposé dans un moule revêtu d'un système démoulant au carbone, permettant d'extraire la pièce densifiée, sous l'effet de la température (250 - 800°C) et de la pression (50 - 300 MPa). Ce système démoulant est adapté à la méthode de densification appelée Spark Plasma Sintering (SPS). La quantité de matière apportée est calculée de manière à compléter la chambre, une fois que cette matière est complètement densifiée.
- (P2)• : Le mélange fait précédemment est introduit dans un creuset à la géométrie voulue, puis il est fondu et refroidi pour obtenir un lingot, une barre, une bille en fonction de ce dont on a besoin comme entrant dans la machine d'injection. Les éléments sont ensuite introduits dans la machine d'injection.
- (P3)• : Le mélange est introduit dans la chambre de stockage de l'imprimante 3D.

Etape -D- :

- (P1)• : D'une part, le mélange contenu dans le moule, est porté à une température comprise entre la température de transition vitreuse et la température de cristallisation de l'alliage de verre métallique ; et, d'autre part, on applique sur le mélange contenu dans le moule, une pression comprise entre 50 et 1 000 MPa. La densification du mélange est opérée via la technique de mise en oeuvre SPS. Les paramètres sont ajustés pour maitriser la densification des pièces, tout en évitant la cristallisation de la matrice verre métallique. Ces paramètres sont spécifiques à chaque composition : type d'alliage et taux volumique de fibres de carbone. Les paramètres importants concernent le cycle thermique (propre à chaque alliage et au paramètre de pression) et la pression appliquée au matériau (50 - 1000 MPa) . Dans ce mode de réalisation, le mélange homogène est amené à une température dépassant la température de transition vitreuse de l'alliage verre métallique, à l'aide d'un courant électrique pulsé. L'application de fortes pressions dans ces conditions permet à la matrice de former des cous de frittage et le temps de maintien adéquat mène à une densification complète du matériau. Le refroidissement de la pièce densifiée est alors opéré pour permettre son démoulage.
- (P2)• : La pièce démoulée est fondue une nouvelle fois puis injectée à grande vitesse, avec ou sans assistance du vide, dans un moule froid dont la température est maitrisée dépendant de la nature du VMM (5 - 100°C)
- (P3)• : Selon la technologie d'imprimante choisie, on imprime la pièce par couches successives pour obtenir la pièce.

Etape -E- :

On récupère le matériau composite obtenu, mis en forme et constitué par

- une matrice de verre métallique,
- et par un renfort fibreux.

La pièce est démoulée et des étapes de parachèvement peuvent être réalisées.

**EXEMPLES**

**EXEMPLE 1** : **Fabrication via SPS** •(P3)•

Matières premières

L'alliage métallique utilisé provient du fournisseur Heraeus. Il est référencé sous le nom AMLOY Zr01. Cette composition est une composition standard d'alliage verre métallique puisqu'il s'agit d'un alliage Zr70Cu24Al4Nb2. Les paramètres granulométriques de cette poudre sont les suivants : $D_{10}$ = 42,76 $\mu$m, $D^{pvm}_{50}$ = 62,99 $\mu$m et $D_{90}$ = 97,06 $\mu$m. Ces paramètres sont mesurés par granulométrie laser selon la norme ISO 13320.

Les fibres de carbone utilisées dans cet exemple sont des fibres de carbone ex-PAN recyclées, provenant du fournisseur ELG Carbon. Leur longueur moyenne $L^{fc^*}$ est de 60 $\mu$m. Ces fibres ensimées suivent un traitement thermique préalable à leur utilisation pour nettoyer la surface. Elles sont placées dans un montage par extracteur de Soxhlet où le solvant en ébullition est de l'acétone. Le lavage des fibres est réalisé durant 24 h. Une étape de séchage est ensuite réalisée : les fibres sont placées dans une étuve sous vide à 400 °C durant 12 h.

Appareillage :

- Une étuve de référence M346 modifiée pour tenir à 400°C provenant de chez France Etuves.

- Mélangeur biconique

- SPS du type HP D25 de la société FCT®

Méthodologie :

1. Désensimer les fibres de carbone via la méthode décrite ci-dessus. Cette étape est réalisée avec 1 kg de fibres.
2. Mélanger les fibres de carbone, à 20% volumique, dans le verre métallique à l'aide du mélangeur biconique pendant 6 heures à 30 - 40 tr/min. On réalise un mélange global de 2 kg.
3. Introduire la quantité de mélange nécessaire dans le moule de pastille (Diamètre 15mm Epaisseur 10mm)
4. Placer le moule dans le SPS et le cycle suivant est lancé : 5min, 410°C et 100MPa
5. Démouler la pièce ainsi obtenue. Cette pièce, de forme cylindrique, de 15 mm de diamètre et de 10 mm d'épaisseur, est montrée sur la figure 4.

Tests d'évaluation

Une première évaluation est faite dès la sortie du moule qui consiste à solliciter la pièce et la faire tomber d'un mètre de haut sans élan sur un sol dur, type béton, en validant que la pièce ne casse pas ni ne s'effrite.

Une évaluation par DRX sur la Bruker D8 - Advanced a été faite (cf fig 6). Elle indique que le matériau reste amorphe selon EN NF 1330-11 : pas de pic cristallin et pic amorphe aligné sur celui du VMM seul.

Une pesée hydrostatique permet de conclure que le taux de porosité est standard de ce type d'application : 3,5% selon ISO 1183-1.

Un post traitement est fait sur la pièce pour pouvoir prendre des clichés au microscope optique de la matière. Ce post traitement est un polissage manuel de la pièce avec un grain 6000 pendant 20 minutes avec un changement de papier toutes les 2 minutes. Plusieurs clichés (Figures 5, 7 & 8) sont pris avec un microscope de type VHX-7000 de Keyence avec divers objectifs.

**EXEMPLE 2 : Frittage sélectif par laser**

**Matières premières** :

Métal : L'alliage métallique utilisé provient du fournisseur Heraeus. Il est référencé sous le nom AMLOY Zr02. Cette composition est une composition standard d'alliage verre métallique puisqu'il s'agit d'un alliage ZrCu16Ni12Al4Ti3. Les paramètres granulométriques de cette poudre de particules 2 sont les suivants : D10 = 21,35 $\mu$m, $D^{pvm}_{50}$ = 40,02

$\mu$m et D90 = 61,86 $\mu$m. Ces paramètres sont déterminés par granulométrie laser selon la norme ISO 13320.

Renfort fibreux : Les fibres 3 de carbone utilisées dans cet exemple sont des fibres de carbone ex-PAN recyclées et désensimées, provenant du fournisseur ELG Carbon. Leur longueur moyenne $L^{fc}$ est de 80 $\mu$m. Afin de rapprocher la taille des fibres de celle du métal, ces dernières ont été rebroyées entre 2 plaques d'acier avec une force de 180 Tonnes pour une surface de poudre de 100cm$^2$ par lot de 30g.

Appareillage :

- Mélangeur biconique

- Imprimante 3D-SLS de type Trumpf TruPrint 1000.

Méthodologie :

La méthode utilisée pour produire ce composite reprend la méthode décrite dans le brevet WO2019179680A1 en substituant le VMM/Cuivre par le mélange VMM/Carbone décrit ci-dessus.

Le mélange utilisé pour cet exemple a été fait dans un mélangeur biconique pendant 5h à 30 - 40 tr/min, afin de mélanger 10 %v de fibres 3 de carbone rebroyées dont la $L^{fc}$ a été ramenée à 30 $\mu$m dans 90 %v de VMM.

Les 5kg ainsi préparés ont été introduits dans la machine de SLS de type Trumpf TruPrint 1000, afin de produire 5 cubes de 10 mm de côté.

## Revendications

1. Matériau composite comprenant un renfort fibreux à base de fibres de carbone inclus dans une matrice de verre métallique **caractérisé en ce que** :

   (1.1) la matrice est amorphe ;
   (1.2) la matrice est obtenue à partir de particules de verre métallique dont la taille est donnée par leur $D_{50}$ désigné par la référence $D^{pvm}_{50}$;
   (1.3) le renfort fibreux comporte des fibres de carbone de longueur moyenne $L^{fc*}$ inférieure ou égale à 3 fois $D^{pvm}_{50}$, de préférence 1,5 fois $D^{pvm}_{50}$ ;
   le taux de renfort fibreux est compris entre 0,1 et 50 %v, de préférence 15 et 45 %v ; et encore plus préférentiellement entre 20 et 40 %v.

2. Matériau composite selon la revendication 1 **caractérisé en ce que** la matrice est un alliage verre métallique constitué d'une base Zr ou Pd ou Fe ou Pt ou Cu ou Au ou Ti ou Ni.

3. Matériau composite selon l'une des revendications précédentes **caractérisé en ce que** $D^{pvm}_{50}$, est telle que, en microns et dans un ordre croissant de préférence :

$$5 \leq D^{pvm}_{50} \leq 500 ; 5 \leq D^{pvm}_{50} \leq 250 ; 20 \leq D^{pvm}_{50} \leq 250 ; 20 \leq D^{pvm}_{50} \leq 100.$$

4. Matériau composite selon selon l'une des revendications précédentes **caractérisé en ce que** la longueur moyenne $L^{fc*}$ des fibres de carbone du renfort fibreux, est telle que, en microns et dans un ordre croissant de préférence :

$$10 \leq L^{fc*} \leq 1000 ; 10 \leq L^{fc*} \leq 500 ; 30 \leq L^{fc*} \leq 500 ; 30 \leq L^{fc*} \leq 300.$$

5. Matériau composite selon l'une des revendications précédentes **caractérisé en ce que** les fibres de carbone du renfort fibreux proviennent de fibres de carbone libres les unes par rapport aux autres et dont la longueur moyenne $L^{fc}$ est inférieure ou égale à 3 fois $D^{pvm}_{50}$, de préférence 1,5 fois $D^{pvm}_{50}$.

6. Matériau composite selon l'une des revendications précédentes **caractérisé en ce que** les fibres de carbone du renfort fibreux proviennent de fibres de carbone libres les unes par rapport aux autres et dont la longueur moyenne L$^{fc}$ est telle que, en microns et dans un ordre croissant de préférence :

$$10 \leq L^{fc} \leq 1000 \; ; \; 10 \leq L^{fc} \leq 500 \; ; \; 30 \leq L^{fc} \leq 500 \; ; \; 30 \leq L^{fc} \leq 300.$$

**7.** Procédé de fabrication d'un matériau composite, en particulier selon l'une des revendications précédentes, ce dernier comprenant un renfort fibreux inclus dans une matrice en verre métallique **caractérisé en ce que** ce matériau est obtenu

- • par frittage/pressage à chaud ;
- • par injection/moulage
- • ou par impression 3D

à partir d'un mélange comprenant :

→ une poudre de particules de verre métallique dont la taille, donnée par leur $D_{50}$ désigné par la référence $D^{pvm}_{50}$ ;
→ des fibres de carbone de longueur moyenne L$^{fc}$.

**8.** Procédé selon la revendication 7
**caractérisé en ce qu'**il consiste essentiellement à :

- A - mettre en oeuvre un dispositif comportant un moule ;
- B - mélanger une poudre de particules de verre métallique dont la taille est donnée par leur D50 désigné par la référence Dpvm50, avec des fibres de carbone libres les unes par rapport aux autres et dont la longueur moyenne Lfc est inférieure ou égale à 3 fois Dpvm50, de préférence 1,5 fois Dpvm50 ; selon un pourcentage volumique de fibres par rapport l'ensemble particules/fibres compris entre 0,1 et 50 %v, de préférence 15 et 45 %v; entre 20 et 40 %v ;
- C - disposer dans le moule, le mélange obtenu à l'étape -B- ;
- D - d'une part, porter le mélange à fritter contenu dans le moule, à une température comprise entre la température de transition vitreuse et la température de cristallisation, de préférence en augmentant par paliers la température du moule ; et, d'autre part, en appliquant sur le mélange contenu dans le moule, une pression comprise entre 50 et 150 MPa ;
- E - récupérer le matériau composite obtenu, mis en forme dans le moule et constitué par

  ♦ une matrice amorphe ;
  ♦ et un renfort fibreux comportant des fibres de carbone de longueur moyenne L$^{fc*}$ inférieure ou égale à 3 fois $D^{pvm}_{50}$, de préférence 1,5 fois $D^{pvm}_{50}$ et présent selon un taux de renfort fibreux compris entre 0,1 et 50 %v, de préférence 15 et 45 %v ; et encore plus préférentiellement entre 20 et 40 %v.

**9.** Procédé selon la revendication 8 **caractérisé en ce que** :

- • le moule fait partie intégrante d'un dispositif de frittage par la technique de frittage par plasma d'étincelles (*"Spark Plasma Sintering"* (SPS), ce dispositif comprenant :

  ☐ au moins un organe permettant d'exercer pression sur le mélange à fritter contenu dans le moule,
  ☐ et des moyens de mise sous tension électrique du moule et, éventuellement, du mélange à fritter contenu dans le moule ; ce dernier étant éventuellement, soumis à une tension électrique générant un plasma ; ou

- • le moule fait partie intégrante d'un dispositif d'injection/moulage.

**10.** Procédé de fabrication d'un matériau composite, en particulier selon l'une des revendications précédentes 1 à 6, ce dernier comprenant un renfort fibreux inclus dans une matrice en verre métallique **caractérisé en ce qu'**il consiste essentiellement à mettre en oeuvre une impression 3D, à partir d'un mélange d'une poudre de particules de verre métallique dont la taille est donnée par leur $D_{50}$ désigné par la référence $D^{pvm}_{50}$, avec des fibres de carbone libres les unes par rapport aux autres et dont la longueur moyenne L$^{fc}$ est inférieure ou égale à 3 fois $D^{pvm}_{50}$, de préférence 1,5 fois $D^{pvm}_{50}$ ; selon un pourcentage volumique de fibres par rapport l'ensemble particules/fibres compris entre 0,1 et 50 %v, de préférence 15 et 45 %v ; entre 20 et 40 %v ;
et à récupérer le matériau composite obtenu, constitué par :

- ♦ une matrice amorphe ;
- ♦ et un renfort fibreux comportant des fibres de carbone de longueur moyenne $L^{fc*}$ inférieure ou égale à 3 fois $D^{pvm}_{50}$, de préférence 1,5 fois $D^{pvm}_{50}$ et présent selon un taux de renfort fibreux compris entre 0,1 et 50 %v, de préférence 15 et 45 %v ; et encore plus préférentiellement entre 20 et 40 %v.

**11.** Objet réalisé en matériau composite selon l'une des revendications précédentes 1 à 6, ou obtenu par un procédé selon l'une au moins des revendications 7 à 10.

**12.** Objet de la revendication 11 choisi parmi les articles suivants : composants horlogers ; articles de joaillerie ; accessoires de mode ; articles de sports et loisirs ; articles de téléphonie ; articles HIFI ; dispositifs et outils pour le secteur médical ; articles pour l'industrie de l'aéronautique et du spatial.

FIG.1

FIG.2

FIG.3

FIG.4

FIG.5

FIG.6

FIG.7

FIG.8

Europäisches
Patentamt

European
Patent Office

Office européen
des brevets

**RAPPORT DE RECHERCHE EUROPEENNE**

Numéro de la demande

**EP 23 15 8333**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 113 600 831 A (UNIV SHANGHAI ENG SCIENCE; UNIV DONGHUA) 5 novembre 2021 (2021-11-05) * revendications * * exemples * ----- | 1-12 | INV. C22C47/14 C22C49/14 C22C49/02 B22F3/00 B22F1/08 |
| A | US 2021/291437 A1 (SWARTZ ROBERT [US] ET AL) 23 septembre 2021 (2021-09-23) * le document en entier * ----- | 1-12 | B22F3/02 B22F3/22 B22F3/105 B33Y80/00 |
| A | US 2006/130943 A1 (PEKER ATAKAN [US]) 22 juin 2006 (2006-06-22) * le document en entier * ----- | 1-12 | C22C45/00 B33Y10/00 C22C45/02 B33Y70/10 |
| A,D | KIM C P ET AL: "Processing of carbon-fiber-reinforced Zr41.2Ti13.8Cu12.5Ni10.0Be22.5 bulk metallic glass composites", APPLIED PHYSICS LETTERS, AMERICAN INSTITUTE OF PHYSICS, 2 HUNTINGTON QUADRANGLE, MELVILLE, NY 11747, vol. 79, no. 10, 3 septembre 2001 (2001-09-03), pages 1456-1458, XP012028797, ISSN: 0003-6951, DOI: 10.1063/1.1390317 * le document en entier * ----- | 1-12 | C22C45/04 C22C45/10 |

| DOMAINES TECHNIQUES RECHERCHES (IPC) |
|---|
| C22C B22F B33Y |

Le présent rapport a été établi pour toutes les revendications

| Lieu de la recherche | Date d'achèvement de la recherche | Examinateur |
|---|---|---|
| La Haye | 29 juin 2023 | Morra, Valentina |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**EP 4 234 751 A1**

## ANNEXE AU RAPPORT DE RECHERCHE EUROPEENNE
## RELATIF A LA DEMANDE DE BREVET EUROPEEN NO.

EP 23 15 8333

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-06-2023

| Document brevet cité au rapport de recherche | | Date de publication | Membre(s) de la famille de brevet(s) | | Date de publication |
|---|---|---|---|---|---|
| CN 113600831 | A | 05-11-2021 | AUCUN | | |
| US 2021291437 | A1 | 23-09-2021 | US | 2018072001 A1 | 15-03-2018 |
| | | | US | 2021291437 A1 | 23-09-2021 |
| US 2006130943 | A1 | 22-06-2006 | AU | 2003252040 A1 | 02-02-2004 |
| | | | US | RE45353 E | 27-01-2015 |
| | | | US | 2006130943 A1 | 22-06-2006 |
| | | | WO | 2004007786 A2 | 22-01-2004 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019179680 A1

**Littérature non-brevet citée dans la description**

- **KIM, C. P. ; BUSCH, R. ; MASUHR, A. ; CHOI-YIM, H. ; JOHNSON, W. L.** Processing of Carbon-Fiber-Reinforced Zr41.2Ti13.8Cu12.5Ni10.0Be22.5 Bulk Metallic Glass Composites. *Appl. Phys. Lett.,* 2001, vol. 79, 1456-1458

- **E. FITZER ; K. H. KÖCHLING ; H. P. BOEHM ; H. MARSH.** Recommended terminology for the description of carbon as a solid. *Pure Appl. Chem.,* 1995, vol. 67 (3), 473-506